# EUROPEAN PATENT APPLICATION

(11) **EP 4 571 881 A1**
(43) Date of publication of application: **18.06.2025**
(21) Application number: 24861296.2
(22) Date of filing: 26.06.2024
(51) Int. Cl.: H01M 4/38, H01M 4/62, H01M 10/0525

(54) **NEGATIVE ELECTRODE MATERIAL AND PREPARATION METHOD THEREFOR, AND BATTERY**

(30) Priority: 28.09.2023 CN 202311924624
(71) Applicant: BTR NEW MATERIAL GROUP CO., LTD., Shenzhen, Guangdong 518106 (CN)
(72) Inventor: XIAO, Chengmao, Shenzhen, Guangdong 518106 (CN); HE, Peng, Shenzhen, Guangdong 518106 (CN); XIONG, Zhuo, Shenzhen, Guangdong 518106 (CN); REN, Jianguo, Shenzhen, Guangdong 518106 (CN); HE, Xueqin, Shenzhen, Guangdong 518106 (CN)
(74) Representative: Studio Torta S.p.A.
(86) International application number: PCT/CN2024/101659
(87) International publication number: WO 2025/066342

(57) **Abstract**

An anode material, a preparation method thereof, and a battery provided. The anode material includes a secondary particle, the secondary particle includes a plurality of agglomerated primary particles, and the primary particle includes an active material doped with iron element and nickel element, where the iron element accounts for a mass content of A ppm in the anode material, the nickel element accounts for a mass content of B ppm in the anode material, and 9.2≤A/B≤20.In the anode material provided, hardness of the nano-silicon is strengthened, thereby improving stability of the nano-silicon particles, reducing volume change of the anode material, and improving cycling stability of the battery.

## Description

### CROSS-REFERENCE TO RELATED APPLICATIONS

This application is a National Stage of International Application No. PCT/CN2024/101659, filed on June 26, 2024, which claims the benefit of priority to Chinese Patent Application No. 202311294624.4 entitled "Anode material, preparation method, and lithium ion battery" filed on September 28, 2023, the entire contents of which are incorporated herein by reference.

### TECHNICAL FIELD

The present disclosure relates to the technical field of an anode material, particularly, to an anode material, a preparation method thereof, and a battery.

### BACKGROUND

In recent years, with the development of the market, a demand for high energy density anode material is continuously increased. A lithium battery is not only used in mobile devices such as smart phone and portable computer, but also applied to electric vehicles and the like. There is a survey showed that the long-endurance mileage is extremely focused by consumers, thus the endurance mileage of the powered automobiles directly affects the consumers' experience. Therefore, a power battery with higher energy density needs to be developed. The cathode and anode materials are core of a battery, determining working efficiency of the battery. At present, the commercial anode material is graphite, a capacity of which is already close to the theoretical upper limit, so a further improvement amplitude is limited. Thereby, there is an urgent need to develop a new generation of high-energy density anode material.

A silicon anode is generally considered as a next-generation anode material for a battery, and has advantages, such as high capacity, rich sources, and relative safety, etc. However, the silicon anode has a severe volume expansion effect during cycling, causing pulverization and breakage of the material, and fast cycle attenuation of the battery.

Therefore, how to reduce pulverization and breakage of a silicon material and improve cycling stability of a silicon anode material is still an urgent problem to be solved at present.

### SUMMARY

The present disclosure provides an anode material, a preparation method thereof, and a battery, so as to strengthen hardness of particles of anode material and improve cycling stability of particles of anode material.

In a first aspect, some embodiments of the present disclosure provide an anode material. The anode material includes a secondary particle. The secondary particle includes a plurality of agglomerated primary particles. A primary particle of the plurality of primary particles includes an active material doped with iron element and nickel element, where the iron element accounts for a mass content of A ppm in the anode material, the nickel element accounts for a mass content of B ppm in the anode material, and 9.2≤A/B≤20.

In a second aspect, some embodiments of the present disclosure provide a preparation method of an anode material, including the following steps:
performing heat treatment on a mixture containing a silicon source precursor, an iron dopant and a nickel dopant to obtain a primary particle doped with iron and nickel; and coating the primary particle to obtain the anode material, where the iron element accounts for a mass content of A ppm in the anode material, the nickel element accounts for a mass content of B ppm in the anode material, and 9.2≤A/B≤20.

In a third aspect, some embodiments of the present disclosure provide a battery. The battery includes the above anode material, or the anode material prepared by the above preparation method.

The technical solution of the present disclosure has at least the following beneficial effects:

In the anode material provided by the present disclosure, the anode material includes a secondary particle. The secondary particle includes a plurality of agglomerated primary particles. A primary particle of the plurality of primary particles includes an active material doped with iron element and nickel element, where the iron element accounts for a mass content of A ppm in the anode material, the nickel element accounts for a mass content of B ppm in the anode material, and 9.2≤A/B≤20. By adding iron element and nickel element into the anode material, iron and nickel are co-doped. Since nickel has greater atomic number than that of iron, a volume difference between nickel atom and silicon atom is larger, thus solid solution strengthening effect is more obvious, and iron nickel co-doping strengthen hardness of the anode material. In addition, the iron element content doped into the anode material is controlled to be higher than that of the nickel element, because iron atom has a small volume influence at heating, while nickel atom has larger volume expansion effect at heating than that of iron atom. Thus, by controlling the ratio A/B within the above range, volume expansion effect of the doped metal element is reduced, and on the basis of which hardness of the anode material is further strengthened, thereby effectively relieving volume expansion stress of the anode material, enhancing structure stability of the anode material, and prolonging cycle life of the battery prepared by the anode material, and the obtained anode material has good electronic conductivity and electrochemical performance.

In the preparation method of an anode material provided by the present disclosure, a mixture containing a silicon source precursor, an iron dopant and a nickel dopant is subjected to heat treatment to obtain a primary particle doped with iron and nickel, a primary particle of the plurality of primary particles includes an active material doped with iron and nickel, and the primary particle is coated to obtain the anode material doped with iron and nickel. By adding iron element and nickel element into the primary particle, hardness of the primary particle is enhanced, thereby effectively relieving volume expansion of the active material, enhancing structure stability of the anode material, and prolonging cycle life of the battery prepared by the anode material. In addition, the entire preparation process is simple and easy to be industrialized. The prepared anode material is stable in structure, and has improved initial Coulombic efficiency. The anode material has enhanced structure stability, thereby improving cycling stability of the anode material.

### BRIEF DESCRIPTION OF DRAWINGS

FIG. 1 is a process flow chart of the preparation method of an anode material provided by some embodiments of the present disclosure;
FIG. 2 is a scanning electron microscope (SEM) image of the anode material prepared by Example 1 of the present disclosure;
FIG. 3 is an XRD pattern of the anode material prepared by Example 1 of the present disclosure;
FIG. 4 is a schematic diagram of initial charge and discharge curve of the anode material prepared by Example 1 of the present disclosure;
FIG. 5 is a schematic diagram of cycle performance curve of the anode material prepared by Example 1 of the present disclosure.

### DESCRIPTION OF EMBODIMENTS

In order to better illustrate the present disclosure and facilitate the understanding of technical solutions of the present disclosure, the present disclosure will be further described in detail below. However, the following embodiments are only simple examples of the present disclosure, and do not represent or limit the scope of protection of the present disclosure, which shall be defined by the claims.

In a first aspect, some embodiments of the present disclosure provide an anode material. The anode material includes a secondary particle. The secondary particle includes a plurality of agglomerated primary particles. A primary particle of the plurality of primary particles includes an active material doped with iron element and nickel element, where the iron element accounts for a mass content of A ppm in the anode material, the nickel element accounts for a mass content of B ppm in the anode material, and 9.2≤A/B≤20. In the present disclosure, the term "primary particle" refers to a primary structure of a single particle, and the term "secondary particle" refers to an aggregate, i.e., a secondary structure, of primary particles aggregated by physical or chemical bonding among the primary particles, without intentionally performing an aggregation or combination process of forming the secondary particle from the primary particles.

In the anode material provided by the present disclosure, the anode material includes a secondary particle. The secondary particle includes a plurality of agglomerated primary particles. A primary particle of the plurality of primary particles includes an active material doped with iron element and nickel element, where the iron element accounts for a mass content of A ppm in the anode material, the nickel element accounts for a mass content of B ppm in the anode material, and 9.2≤A/B≤20. By adding iron element and nickel element into the anode material, iron and nickel are co-doped. Since nickel has greater atomic number than that of iron, a volume difference between nickel atom and silicon atom is larger, thus solid solution strengthening effect is more obvious, and iron nickel co-doping strengthen hardness of the anode material. In addition, the iron element content doped into the anode material is controlled to be higher than that of the nickel element, because iron atom has a small volume change at heating, while nickel atom has larger volume expansion effect at heating than that of iron atom. Thus, by controlling the ratio A/B within the above range, volume expansion effect of the doped metal element is reduced, and on the basis of which hardness of the anode material is further strengthened, thereby effectively relieving volume expansion of the active material, enhancing structure stability of the anode material, and prolonging cycle life of the battery prepared by the anode material, and so that the obtained anode material has good electronic conductivity and electrochemical performance.

For example, a ratio of the mass content A ppm of the iron element in the anode material and the mass content B ppm of the nickel element in the anode material, i.e., A/B, may be 9.2, 10, 12, 14, 16, 18, 20, etc., which is not limited herein. Controlling the ratio of the mass content of the iron element and the mass content of the nickel element, as well as doping the nickel element and the iron element to the anode material, improve hardness of the anode material, resist stress caused by expansion of the active materials during rolling plate or cyclically charging and discharging, inhibit pulverization and breakage of the particles, and improve cycling stability of a battery prepared by the anode material.

In some embodiments, the active material refers to a material that react with lithium for de-lithiation and lithiation.

The active material includes at least one of an elemental metal, a metal oxide, and a metal alloy. Further, the metal includes at least one of Li, Na, K, Sn, Ge, Si, Fe, Mg, Ti, Zn, Al, P, and Cu. The elemental metal refers to an elementary substance of the above metal, the metal oxide refers to an oxide of the above metal, and the metal alloy refers to an alloy including at least one of the above metal.

In some embodiments, the active material includes a silicon-based material. The silicon-based material includes at least one of crystalline silicon, amorphous silicon, silicon oxide, silicon alloy, and a composite of crystalline silicon and amorphous silicon. For example, the silicon alloy is a silicon lithium alloy, a silicon magnesium alloy, etc. Certainly, it should be noted that in some embodiments, the silicon alloy includes both elementary substance particles and alloy.

In some embodiments, a total mass content of the iron element and the nickel element accounts for <1% in the anode material, which may specifically be 0.99%, 0.8%, 0.7%, 0.6%, 0.5%, 0.4%, 0.3%, 0.2% or 0.1%, etc., but is not limited to the recited values, and other unrecited values within the numerical range are also applicable. By numerous experiments, it is found that controlling addition amounts of the iron element and the nickel element respectively within the above ranges significantly improves performance of the material. When the total mass content of the iron element and the nickel element in the anode material is greater than the above range, magnetism of the iron element and the nickel greatly affects the anode material, which does not facilitate cycling stability of a battery prepared by the anode material. Thus, controlling mass contents of the iron element and the nickel element in the anode material controls magnetic substance in the anode material not to be excessive, thereby reducing an influence of magnetic field effect on resisting fatigue and aging by the anode material, and improving hardness of the anode material while not affecting electrochemical performance of the anode material, so as to resist stress caused by expansion, inhibit pulverization and breakage of the particles, and improve cycling stability of a battery prepared by the anode material.

In some embodiments, the iron element accounts for a mass content of A ppm in the anode material, where 0.1≤A≤1000, which may specifically be 0.1 ppm, 20 ppm, 100 ppm, 300 ppm, 500 ppm, 700 ppm, 900 ppm or 1000 ppm, etc., but is not limited to the recited values, and other unrecited values within the numerical range are also applicable.

**In** some embodiments, the nickel element accounts for a mass content of B ppm in the anode material, where 0.1≤B≤500, and may specifically be 0.1 ppm, 20 ppm, 100 ppm, 200 ppm, 300 ppm, 400 ppm, 500 ppm, etc., but is not limited to the recited values, and other unrecited values within the numerical range are also applicable.

In some embodiments, the plurality of primary particles have an average particle size D₅₀ of 1 nm to 500 nm, which may specifically be 1 nm, 50 nm, 100 nm, 200 nm, 300 nm, 400 nm or 500 nm, etc., but is not limited to the recited values, and other unrecited values within the numerical range are also applicable. By numerous experiments, it is found that the primary particle in nanoscale has high surface energy and strong particle structure, thereby inhibiting volume expansion of silicon. However, the smaller the particle size of the primary particle in nanoscale is, the larger the surface energy thereof is, resulting in tendency for agglomeration during charging and discharging. Further, when the particle size is too small, a production cost is high. For example, the plurality of primary particles have an average particle size D₅₀ of 1 nm to 200 nm, and for example, the plurality of primary particles have an average particle size D₅₀ of 5 nm to 100 nm.

In some embodiments, a primary particle of the plurality of primary particles have a particle size satisfying the following relationship: (D₁₀₀-D₁₀)/D₅₀≥1.5, which may specifically be 1.5 nm, 2 nm, 5 nm, 10 nm, 50 nm, 100 nm, 200 nm, etc., but is not limited to the recited numerical values, and other unrecited numerical values within the numerical value range are also applicable. It should be noted that due to small particle size of the primary particle, and average particle sizes D₅₀ and D₁₀ and maximum particle size D₁₀₀ of which are obtained by performing particle size analysis and statistics on SEM images through using the Nano Measurement software. The specific test method is as follows: setting a SEM image to have a multiple of 50K, measuring sizes of 200 particles in the SEM image by the Nano Measurement software, and calculating an average particle size of the 200 particles as D1, and a maximum of the 200 particles as a maximum D2 of the primary particle; then measuring at least 10 SEM images repeatedly for results, and calculating these averages in which for a mean value. The maximum of the primary particles is the maximum D₁₀₀ of the particles obtained by measuring at least 10 SEM images for statistics. The average particle size of the primary particles is a statistical average particle size of 10 measurements, i.e., (D1+D2+··· +D10)/10. D₁₀ represents a particle size corresponding to a cumulative particle size distribution percentage of the powder reaching 10%.

In some embodiments, the anode material further includes a carbon material present on at least a part of surface of the secondary particle and/or the primary particle, and the carbon material forms a carbon layer. For example, the carbon layer includes amorphous carbon. The amorphous carbon has good compatibility with an electrolyte, thereby ensuring stability of electrical performance of the anode material during charging and discharging. Exemplarily, the amorphous carbon in the carbon layer is formed by carbonizing at least one of petroleum asphalt, coal tar pitch, modified asphalt, and mesophase pitch.

In some embodiments, the active material includes a silicon-based material. The silicon-based material is further doped with an oxygen element. The oxygen element accounts for a mass content of 0.1% to 18% in the anode material, which may specifically be 0.1%, 1%, 3%, 6%, 9%, 12%, 15%, 18%, etc., but is not limited to the recited values, and other unrecited values within the numerical range are also applicable. By adding the oxygen in the above range, volume expansion of the silicon-based material is reduced, and cycle performance of a battery prepared by the anode material including the silicon-based material is improved. When an oxygen content of the silicon-based material is too high, capacity and initial Coulombic efficiency of the anode material including the silicon-based material are reduced.

In some embodiments, the anode material has a specific surface area of 0.1 m²/g to 5 m²/g; which may specifically be 0.1 m²/g, 0.3 m²/g, 0.5 m²/g, 1.0 m²/g, 1.8 m²/g, 2.6 m²/g, 3.5 m²/g, 5.0 m²/g, and certainly may also be other values within the above range, which is not limited herein. Controlling the specific surface area of the anode material within the above range facilitates to improve cycle performance of a lithium battery prepared by the anode material.

In some embodiments, the anode material has a median particle size of 0.5 µm to 30 µm; which may specifically be 0.5 µm, 1 µm, 5 µm, 8 µm, 10 µm, 13 µm, 15 µm, 18 µm, 20 µm, 25 µm, or 30 µm, etc., and certainly may also be other values within the above range, which is not limited herein. It is understood that, controlling the median particle size of the anode material within the above range facilitates to improve cycle performance of the anode material.

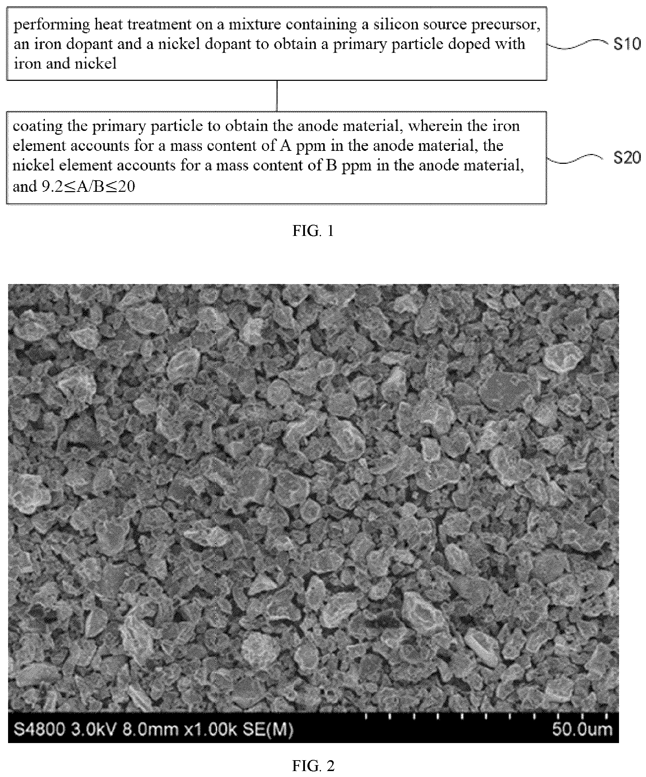

In a second aspect, embodiments of the present disclosure provide a preparation method of an anode material, as shown in FIG. 1, including the following steps:
S10, performing heat treatment on a mixture containing an active material precursor, an iron dopant and a nickel dopant to obtain a primary particle doped with iron and nickel; and
S20, coating the primary particle to obtain the anode material, where the iron element accounts for a mass content of A ppm in the anode material, the nickel element accounts for a mass content of B ppm in the anode material, and 9.2≤A/B≤20.

In the preparation method of an anode material provided by the present disclosure, a mixture containing an active material precursor, an iron dopant and a nickel dopant is subjected to heat treatment to obtain a primary particle doped with iron and nickel, and the primary particle doped with iron and nickel is coated to obtain the anode material doped with iron and nickel. By adding iron element and nickel element into the primary particle, hardness of the primary particle is enhanced, thereby effectively relieving volume expansion of the anode material during de-lithiation and lithiation, enhancing structure stability of the anode material, and prolonging cycle life of the battery prepared by the anode material. In addition, the entire preparation process is simple and easy to be industrialized. The prepared anode material is stable in structure, and has improved initial Coulombic efficiency. The anode material has enhanced structure stability, thereby improving cycling stability of a battery prepared by the anode material.

The preparation method provided by embodiments of the present disclosure is described in detail below.

S10, performing heat treatment on a mixture containing an active material precursor, an iron dopant and a nickel dopant to obtain a primary particle doped with iron and nickel.

In some embodiments, the iron dopant includes at least one of iron powder, ferric nitrate, nickel nitrate, ferrous lactate (C₆H₁₀FeO₆·3H₂O), ferric citrate (FeC₆H₅O₇), yellow blood salt (K₄[Fe(CN)₆]•3H₂O), ferric glycinate (Fe[C₂H₄O₂N]₂), and ferrocene (Fe(C₅H₅)₂).

In some embodiments, the nickel dopant includes at least one of nickel oleate, nickel propionate, nickel butyrate, nickel octoate, nickel lactate, nickel benzoate, nickel bis(acetylacetonate), nickel salicylate, and nickel alkylphenyl salicylate.

In some embodiments, the process for performing heat treatment on a mixture containing an active material precursor, an iron dopant and a nickel dopant includes: forming primary particle from a vapor active material, such as a silicon source precursor, through vapor deposition, and doping metal vapor generated by iron dopant and nickel dopant into the primary particle. It is understood that the above iron dopant and nickel dopant are both compounds which are easy to decompose at a relatively low temperature, and these compounds decompose to vapor containing a metal element under heating.

In some embodiments, the vapor deposition has a temperature of 300°C to 1000°C, which may specifically be 300°C, 350°C, 400°C, 500°C, 600°C, 700°C, 800°C, 900°C or 1000°C, but is not limited to the recited values, and other unrecited values within the numerical range are also applicable.

In some embodiments, the vapor silicon source precursor includes at least one of silane, disilane, trisilane, tetrasilane, and silane.

In some embodiments, the vapor silicon source precursor has a flow rate of 5 scc to 1000 scc, which may specifically be 5 scc, 30 scc, 60 scc, 200 scc, 300 scc, 600 scc, 800 scc or 1000 scc, etc., but is not limited to the recited values, and other unrecited values within the numerical range are also applicable.

In some embodiments, a mass ratio of the iron dopant and the nickel dopant is 0.1 to 30, which may specifically be 0.1, 0.5, 1, 2, 5, 8, 10, 15, 20, 25, or 30, etc., but is not limited to the recited values, and other unrecited values within the numerical range are also applicable.

In some embodiments, the process for performing heat treatment on a mixture containing silicon source precursor, an iron dopant and a nickel dopant adopts a liquid mixing. For example, it includes: adding a metal reducing agent into a mixed solution containing a liquid silicon source precursor, an iron dopant and a nickel dopant, solid-liquid separating to obtain a mixture, and performing heat treatment to obtain a primary particle doped with nickel and iron.

In some embodiments, the liquid silicon source precursor includes at least one of trichlorosilane, silicon tetrachloride, methylchlorosilane, polysilane, and triethylchlorosilane.

In some embodiments, a mass ratio of the liquid silicon source precursor, the iron dopant, the nickel dopant, and the metal reducing agent is (40 to 100): (0.01 to 1): (0.05 to 1): (0.01 to 5), which may specifically be 40:0.01:0.05:0.01, 40:0.05:0.1:0.1, 40:0.05:0.1:0.5, 100:1:0.5:0.1, 100:1:1:5, but are not limited to the listed values, and other unlisted values within the value range are also applicable.

In some embodiments, the metal reducing agent includes at least one of magnesium powder, zinc powder, aluminum powder, lithium powder, sodium powder, and potassium powder.

In some embodiments, a mass ratio of the metal reducing agent and the liquid silicon source precursor is (0.01 to 5): 100.

In some embodiments, the heat treatment has a temperature of 400°C to 1200°C, and a duration of 1 h to 15 h. The temperature of the heat treatment may specifically be 400°C, 500°C, 600°C, 700°C, 800°C, 950°C, 1500°C, 1200°C, etc., and the duration of the heat treatment may specifically be 1 h, 2 h, 4 h, 6 h, 9 h, 11 h, 12 h, 14 h, 15 h, etc., which are not limited herein.

In some embodiments, the mixture is further added with a coating agent. The mixture is subjected to a heating process under protection of inert gas, and then to an acid treatment, to obtain the primary particle doped with nickel and iron.

In some embodiments, the coating agent includes at least one of a liquid carbon source or a solid carbon source. Exemplarily, the solid carbon source includes at least one of a saccharide, an ester, a hydrocarbon, an organic acid, and a polymer.

In some embodiments, the inert gas includes at least one of helium, neon, argon, krypton, and xenon.

In some embodiments, the heating process has a temperature of 500°C to 1000°C, which may specifically be 500°C, 600°C, 700°C, 800°C, 900°C or 1000°C, etc., but is not limited to the recited values, and other unrecited values within the numerical range are also applicable. The heating process has a duration of 11 h to 115 h, which may specifically be 11 h, 20 h, 30 h, 50 h, 70 h, 80 h, 90 h, 100 h, 115 h, etc., which is not limited herein.

In some embodiments, an acid used for the acid treatment includes at least one of hydrochloric acid, nitric acid, sulfuric acid, oxalic acid, and acetic acid.

S20, coating the primary particle to obtain the anode material, where the iron element accounts for a mass content of A ppm in the anode material, the nickel element accounts for a mass content of B ppm in the anode material, and 9.2≤A/B≤20.

In some embodiments, a process for coating includes at least one of a solid arbon coating process, a liquid carbon coating process, and a vapor carbon coating process.

In some embodiments, the process for coating is the solid carbon coating process, for example, including: carbonizing a mixture obtained by mixing the primary particle and a solid carbon source, to obtain the anode material.

In some embodiments, the carbonizing has a temperature of 500°C to 1000°C. , which may specifically be 500°C, 600°C, 650°C, 800°C, 950°C, 1000°C, etc., but it is not limited to the recited numerical values, and other unrecited numerical values within this numerical range are also applicable. The carbonizing has a heat preservation time of 30 min to 24 h, which may specifically be 30 min, 2 h, 5 h, 8 h, 11 h, 13 h, 16 h, 17 h, 18 h, 20 h, 24 h, etc., but is not limited to the recited values, and other unrecited values within the numerical range are also applicable.

It is understood that controlling the temperature of the carbonizing to be within a suitable range reduces occurrence of thermal decomposition of the primary particle when the temperature is too high, as well as occurrence of insufficient carbonization of the primary particles when the temperature is too low. Sufficient carbonization of coating layer of the primary particle facilitates more fully mixing of the primary particle and the solid carbon source, thereby reducing impedance of the product.

In some embodiments, the solid carbon source includes at least one of a saccharide, an ester, a hydrocarbon, an organic acid, and a polymer.

In some embodiments, the solid carbon source includes at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, and phenolic resin.

In some embodiments, a mass ratio of the solid carbon source and the primary particle is 5:(5 to 95), which may specifically be 5:5, 5:15, 5:35, 5:50, 5:60, 5:75, 5:95, etc., but it is not limited to the recited values, and other unrecited values within the numerical range are also applicable.

In a third aspect, embodiments of the present disclosure provide a battery. The battery includes the anode material according to the above first aspect, or the anode material prepared by the preparation method according to the above second aspect.

In some other embodiments, the anode material is applied to a lithium ion battery, or to other electrochemical device, such as a sodium ion battery.

Those skilled in the art will appreciate that the lithium ion battery preparation method described above is only an embodiment. Other methods commonly used in the art may be employed without departing from the scope of the present disclosure.

The embodiments of the present disclosure are further illustrated by the following several examples. The embodiments of the present disclosure are not limited to the following specific examples. Within the scope of protection, changes may be implemented appropriately.

### Example 1

The preparation method of the anode material of this Example including:
(1) 5 g ferric nitrate (Fe(NO₃)₃) powder and 0.8 g nickel nitrate (Ni(NO₃)₂) powder were placed on substrate of a chemical vapor deposition device, to which silane was introduced at a flow rate controlled to be 50 scc. The temperature was increased up to 600°C, then the vapor deposition reaction was carried out for 1 h, to obtain a primary particle; and
(2) the obtained primary particle and phenolic resin were mixed in a mass ratio of 40:43, then placed in a high-temperature box furnace, introduced with nitrogen gas, and carbonized at 950°C for 2 h. The carbonized product was crushed, screened, and graded, to obtain the anode material.

The anode material prepared by this example includes a secondary particle, the secondary particle includes a plurality of agglomerated primary particles, and a primary particle of the plurality of primary particles includes a silicon particle doped with iron element and nickel element, where the iron element accounts for a mass content of A ppm in the anode material, the nickel element accounts for a mass content of B ppm in the anode material, and a ratio A/B is 9.2.

FIG. 2 is a scanning electron micrograph image of the anode material prepared by Example 1.

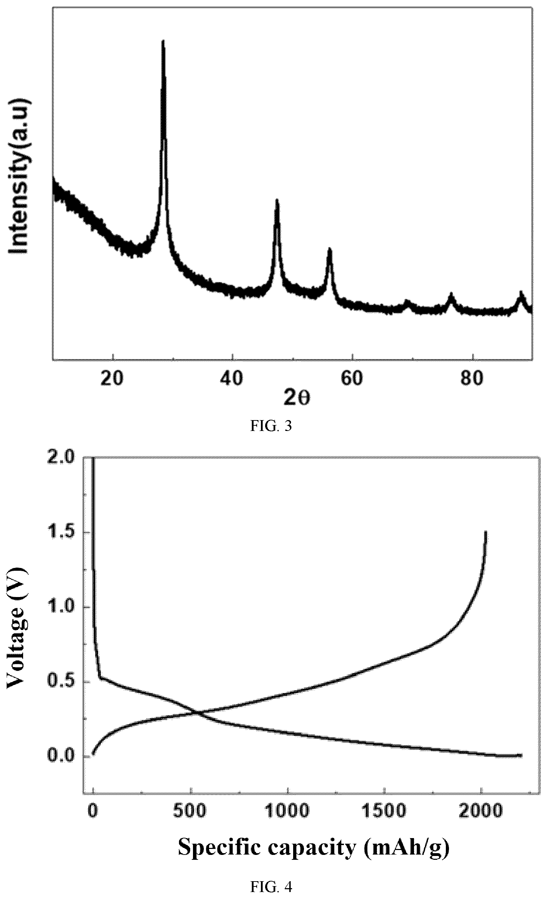

FIG. 3 is an XRD pattern of the anode material prepared by Example 1. It is observed from this figure that there is a silicon characteristic peak in the anode material.

FIG. 4 is a schematic diagram of initial charge and discharge curve of the anode material prepared by Example 1. It is seen from FIG. 4 that the initial charge and discharge capacity of the anode material is relative high, reaching 1855 mAh/g, and an initial Coulombic efficiency is also high.

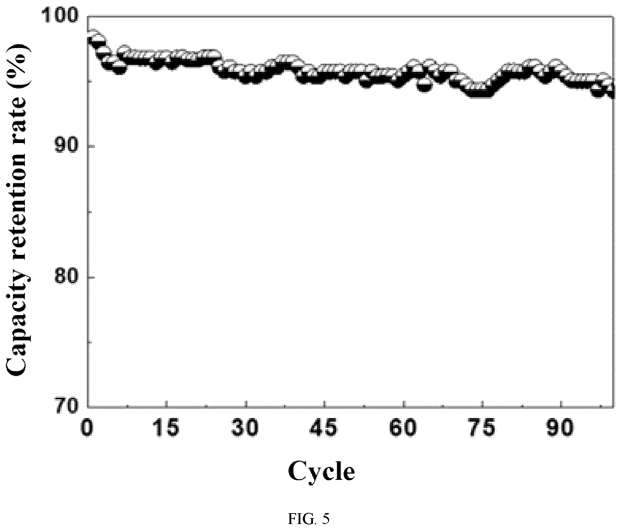

FIG. 5 is a schematic diagram of cycle performance curve of the anode material prepared by Example 1. It is seen from FIG. 5 that the anode material has a capacity retention rate of 94.2% for 100 cycles, thus the anode material has excellent cycle performance.

### Example 2

The preparation method of the anode material of this Example including:
(1) silicon tetrachloride, ferric chloride solution, and nickel chloride solution were added into a reactor for mixing, and metal magnesium powder was added, in a mass ratio of silicon tetrachloride: magnesium: ferric chloride: nickel chloride of 100:28.5 0.5:0.03. The reactor was heated up to 300°C in a sealed state, then a reduction reaction was carried out for 15 h, to obtain a primary particle with a ratio A/B of 14.4; and
(2) the obtained primary particle and sucrose were mixed in a mass ratio of 55:69, then placed in a high-temperature box furnace, introduced with nitrogen gas, and carbonized at 920°C for 4 h. The carbonized product was crushed, screened, and graded, to obtain the anode material.

The anode material prepared by this example includes a secondary particle, the secondary particle includes a plurality of agglomerated primary particles, and a primary particle of the plurality of primary particles includes a silicon particle doped with iron element and nickel element, where the iron element accounts for a mass content of A ppm in the anode material, the nickel element accounts for a mass content of B ppm in the anode material, and a ratio A/B is 14.4.

### Example 3

(1) silica nanoparticle, metal aluminum powder, and mixed asphalt were added into a reactor in a mass ratio of silica nanoparticle: metal aluminum: mixed asphalt of 180:25:110, then 0.6 g of ferric chloride and 0.1 g of nickel chloride were added, the mixture was heated up to 950°C under argon atmosphere, reacted for 12 h, and cooled. The product was immersed in an acid solution for washing, and dried, to obtain a primary particle with a ratio A/B of 9.6; and
(2) the obtained primary particle and phenolic resin were mixed in a mass ratio of 50:65, then placed in a high-temperature box furnace, introduced with nitrogen gas, and carbonized at 980°C for 5 h. The carbonized product was crushed, screened, and graded, to obtain the anode material.

The anode material prepared by this example includes a secondary particle, the secondary particle includes a plurality of agglomerated primary particles, and a primary particle of the plurality of primary particles includes a silicon particle doped with iron element and nickel element, where the iron element accounts for a mass content of A ppm in the anode material, the nickel element accounts for a mass content of B ppm in the anode material, and a ratio A/B is 9.6.

### Example 4

(1) 9 g ferric nitrate (Fe(NO₃)₃) powder and 1.8 g nickel nitrate (Ni(NO₃)₂) powder were placed on substrate of a chemical vapor deposition device, to which silane and acetylene gas were introduced in a volume ratio controlled to be 25:1 and at a flow rate of silane and acetylene gas controlled to be 60 scc. The temperature was increased up to 700°C, then the vapor deposition reaction was carried out for 3 h, to obtain a primary particle; and
(2) the obtained primary particle and phenolic resin were mixed in a mass ratio of30:45, then placed in a high-temperature box furnace, introduced with nitrogen gas, and carbonized at 820°C for 4 h. The carbonized product was crushed, screened, and graded, to obtain the anode material.

The anode material prepared by this example includes a secondary particle, the secondary particle includes a plurality of agglomerated primary particles, the anode material further includes a carbon material present on at least a part of surface of the secondary particle and the primary particle, and a primary particle of the plurality of primary particles includes a silicon particle doped with iron element and nickel element, where the iron element accounts for a mass content of A ppm in the anode material, the nickel element accounts for a mass content of B ppm in the anode material, and a ratio A/B is 10.6.

### Example 5

(1) trichlorosilane solution was added into a reactor, and fructose solution and metal zinc powder in equal volume ratio were added, in a mass ratio of trichlorosilane: metal zinc powder: fructose of 100:29.5:11.4, then 1.6 g of ferric chloride and 0.3 g of nickel chloride were added. The reactor was heated up to 350°C in a sealed state, and a reaction is carried out for 15 h, centrifuged and dried, to obtain a primary particle; and
(2) the obtained primary particle and sucrose were mixed in a mass ratio of 20:45, then placed in a high-temperature box furnace, introduced with nitrogen gas, and carbonized at 950°C for 2 h. The carbonized product was crushed, screened, and graded, to obtain the anode material.

The anode material prepared by this example includes a secondary particle, the secondary particle includes a plurality of agglomerated primary particles, the anode material further includes a carbon material present on at least a part of surface of the secondary particle and the primary particle, and a primary particle of the plurality of primary particles includes a silicon particle doped with iron element and nickel element, where the iron element accounts for a mass content of A ppm in the anode material, the nickel element accounts for a mass content of B ppm in the anode material, and a ratio A/B is 19.

### Example 6

(1) 400 g of commercial SiO particle was used as a raw material, and 1 g of ferric nitrate (Fe(NO₃)₃) and 0.1 g of nickel nitrate (Ni(NO₃)₂) powder were added, grinded under a nitrogen atmosphere at a rotation speed of 400 rpm for 6 h, to obtain a primary particle; and
(2) the obtained primary particle and phenolic resin were mixed in a mass ratio of 40:33, then placed in a high-temperature box furnace, introduced with nitrogen gas, and carbonized at 950°C for 2 h. The carbonized product was crushed, screened, and graded, to obtain the anode material.

The anode material prepared by this example includes a secondary particle, the secondary particle includes a plurality of agglomerated primary particles, and a primary particle of the plurality of primary particles includes a silicon particle doped with iron element and nickel element, where the iron element accounts for a mass content of A ppm in the anode material, the nickel element accounts for a mass content of B ppm in the anode material, and a ratio A/B is 9.9.

### Example 7

(1) 600 g of commercial LiSi particle was used as a raw material, and 1 g of ferric nitrate (Fe(NO₃)₃) and 0.09 g of nickel nitrate (Ni(NO₃)₂) powder were added, grinded under an argon atmosphere at a rotation speed of 450 rpm for 5 h, to obtain a primary particle; and
(2) the obtained primary particle and polyvinyl alcohol were mixed in a mass ratio of 50:56, then placed in a high-temperature box furnace, introduced with nitrogen gas, and carbonized at 850°C for 6 h. The carbonized product was crushed, screened, and graded, to obtain the anode material.

The anode material prepared by this example includes a secondary particle, the secondary particle includes a plurality of agglomerated primary particles, and a primary particle of the plurality of primary particles includes a silicon particle doped with iron element and nickel element, where the iron element accounts for a mass content of A ppm in the anode material, the nickel element accounts for a mass content of B ppm in the anode material, and a ratio A/B is 9.3.

### Comparative Example 1

This comparative example was conducted in the same way as Example 1 excepting that: an anode material was obtained without performing the coating process in step (2).

The anode material prepared by this comparative example includes a primary particle, and the primary particle includes an active material doped with iron element and nickel element.

### Comparative Example 2

This comparative example was conducted in the same way as Example 1 excepting that:
(1) 0.5 g ferric nitrate powder and 0.32 g nickel nitrate powder were placed on substrate of a chemical vapor deposition device, to which silane was introduced at a flow rate controlled to be 50 scc. The temperature was increased up to 600°C, then a reaction was carried out for 1 h, to obtain a primary particle.

The anode material prepared by this example includes a primary particle, and the primary particle includes a silicon particle doped with iron element and nickel element, where the iron element accounts for a mass content of A ppm in the anode material, the nickel element accounts for a mass content of B ppm in the anode material, and a ratio A/B is 9.0.

### Comparative Example 3

This comparative example was conducted in the same way as Example 1 excepting that:
(1) 12 g ferric nitrate powder and 1 g nickel nitrate powder were placed on substrate of a CVD device, to which silane was introduced at a flow rate controlled to be 50 scc. The temperature was increased up to 600°C, then a reaction was carried out for 1 h, to obtain a primary particle.

The anode material prepared by this example includes a primary particle, and the primary particle includes a silicon particle doped with iron element and nickel element, where the iron element accounts for a mass content of A ppm in the anode material, the nickel element accounts for a mass content of B ppm in the anode material, and a ratio A/B is 21.2.

### Comparative Example 4

This comparative example was conducted in the same way as Example 1 excepting that: an anode material was obtained without performing the doping of Fe and Ni in step (1).

The anode material prepared by this example includes a secondary particle, the secondary particle includes a plurality of agglomerated primary particles, and the primary particle includes a silicon particle.

### Comparative Example 5

This comparative example was conducted in the same way as Example 1 excepting that: 17.2 g ferric nitrate (Fe(NO₃)₃) powder was placed on substrate of a chemical vapor deposition device, to which silane was introduced at a flow rate controlled to be 50 scc. The temperature was increased up to 600°C, then the vapor deposition reaction was carried out for 1 h, to obtain a primary particle.

The anode material prepared by this example includes a secondary particle, the secondary particle includes a plurality of agglomerated primary particles, and the primary particle includes a silicon particle, where the iron element accounts for a mass content of A ppm in the anode material, the nickel element accounts for a mass content of B ppm in the anode material, and a ratio A/B is 82.

### Comparative Example 6

This comparative example was conducted in the same way as Example 1 excepting that: 0.8 g nickel nitrate (Ni(NO₃)₂) powder was placed on substrate of a chemical vapor deposition device, to which silane was introduced at a flow rate controlled to be 50 scc. The temperature was increased up to 600°C, then the vapor deposition reaction was carried out for 1 h, to obtain a primary particle.

The anode material prepared by this example includes a secondary particle, the secondary particle includes a plurality of agglomerated primary particles, and the primary particle includes a silicon particle, where the iron element accounts for a mass content of A ppm in the anode material, the nickel element accounts for a mass content of B ppm in the anode material, and a ratio A/B is 0.06.

### Test Method:

(1) Test of the mass contents of iron element and nickel element in the anode material:
   A ICP method was adopted for testing the contents of Fe and Ni in the particles, according to a standard of GB/T38823-2020.
(2) The particle size of the primary particle:
   A SEM image was set to have a multiple of 50K, sizes of 200 particles in the SEM image were measured by a Nano Measurement software, and calculating an average particle size of the 200 particles as D1, and a maximum of the 200 particles as a maximum D2 of the primary particle; then at least 10 SEM images were measured repeatedly for results, and these averages in which were calculated for a mean value. 10 SEM images were measured for statistics to obtain a maximum of the particles as the maximum of the primary particles. The average particle size of the primary particles is a statistical average particle size of 10 measurements, i.e., (D1+D2+··· +D10)/10.
(3) The specific surface area of the anode material:
   A dynamic specific surface area rapid tester JW-DX purchased from Beijing JWGB Sci & Tech Ltd was adopted for testing, in a unit of m²/g.
(4) The median particle size of the anode material:
   A Malvern laser particle size analyzer was adopted for testing particle size distribution range of the anode material.
(5) Test of the mass content of oxygen element in the anode material:
   An oxygen content tester was adopted for testing the oxygen content of the anode material, according to a standard of ISO 17053: 2005.
(6) Test on pressure resistance hardness of the anode material:
   A nanoindentation instrument was adopted for measuring an indentation hardness, with a loading 0.6 N, and an indentation depth 0.5 µm, for testing the pressure resistance hardness.
(7) Test of electrochemical performance
   The each anode material prepared by Examples and Comparative Examples, carboxymethyl cellulose, and styrene-butadiene rubber were dissolved in N-methyl pyrrolidone in a mass ratio of 94:1:5, with a solid content controlled to be 50%, applied to a copper foil current collector, and vacuum dried, to prepare anode plates; cylindrical batteries were assembled by conventional production process by further using a metal lithium sheet as a counter electrode, 1 mol/L of electrolyte containing LiPF₆/(ethylene carbonate + dimethyl carbonate + methyl ethyl carbonate (v/v=1:1:1)), Celgard 2400 separator, and a shell. The test for charging and discharging of the cylindrical batteries was performed by a LAND cell test system purchased from Wuhan Jinnuo Electronics Co., Ltd, under room temperature, at 0.2C constant current, and a voltage controlled to be 2.75 V to 4.2 V. An initial thickness H0 of the plate of the lithium ion battery was measured by using a micrometer. Cyclic charging and discharging was performed to obtain an initial reversible capacity, an initial charging capacity, and an initial discharging capacity. The initial Coulombic efficiency = the initial discharging capacity / the initial charging capacity.

The results of the above performance test are as follows:

**Table 1 The performance parameters of the each anode material prepared by Examples and Comparative Examples and battery thereof**

| Sample | Total mass content of Fe and Ni in the anode material (%) | A/B Ratio | (D₁₀₀-D₁₀)/D₅₀ | Oxygen element content in the anode material % | Pressure resistance hardness (Mpa) | Initial reversible capacity (mAh/g) | Initial Coulombic efficiency (%) | Capacity retention after 100 cycles (%) |
|---|---|---|---|---|---|---|---|---|
| S1 | 0.3 | 9.2 | 3.2 | 1.4 | 544 | 1855 | 91.2 | 94.2 |
| S2 | 0.5 | 14.4 | 2.2 | 10.8 | 608 | 1755 | 88.9 | 93.2 |
| S3 | 0.18 | 9.6 | 1.8 | 9.6 | 462 | 1815 | 88.0 | 93.0 |
| S4 | 0.62 | 10.6 | 4.3 | 2.0 | 677 | 1804 | 91.5 | 94.4 |
| S5 | 0.12 | 19 | 2.5 | 11.9 | 443 | 1785 | 87.6 | 93.3 |
| S6 | 0.2 | 9.9 | 3.3 | 35.4 | 494 | 1385 | 77.9 | 94.9 |
| S7 | 0.15 | 9.3 | 3.7 | 1.8 | 344 | 2245 | 93.2 | 92.9 |
| D1 | 0.29 | 9.2 | 1.5 | 6.9 | 409 | 1811 | 87.2 | 80.2 |
| D2 | 0.02 | 9.0 | 3.1 | 1.6 | 205 | 1779 | 91.0 | 92.7 |
| D3 | 0.8 | 21.2 | 3.0 | 1.7 | 894 | 1709 | 91.4 | 82.4 |
| D4 | / | / | 2.9 | 2.0 | 38 | 1801 | 90.2 | 86.0 |
| D5 | 1.2 | 82 | 2.6 | 2.1 | 105 | 1844 | 91.1 | 88.1 |
| D6 | 0.061 | 0.06 | 3.1 | 1.9 | 1131 | 1812 | 91.2 | 87.4 |

From the test data of Examples 1 to 7, it can be seen that by adding proper amounts of iron element and nickel element into nano-silicon, hardness of the nano-silicon is strengthened, thereby effectively relieving volume expansion of the anode material including the nano-silicon, enhancing structure stability of the anode material, and prolonging cycle life of the battery prepared by the anode material, and so that the obtained anode material has good electronic conductivity and electrochemical performance.

The active material in Example 6 is silicon oxide SiO with a relatively low theoretical capacity, so the initial reversible capacity and the initial Coulombic efficiency of the prepared anode material are relatively reduced. But, due to the addition of proper amounts of iron element and nickel element, hardness of the anode material is enhanced, thereby effectively relieving volume expansion of the anode material during de-lithiation and lithiation, enhancing structure stability of the anode material, and prolonging cycle life of the battery prepared by the anode material.

Compared with Example 1, during the process of preparing a graphite anode material of Comparative Example 1, the primary particle was not coated. Thus, performance of this product is difficult to be improved, and initial Coulombic efficiency and cycle performance of the battery are both reduced. Therefore, it can be seen that on one hand, the coated carbon material reduces decrease of initial Coulombic efficiency caused by a side reaction due to entering of electrolyte into interior, and on the other hand, relieves volume expansion of silicon cooperated with the primary particle doping with iron element and nickel element, thereby reducing volume expansion of the entire composite anode material, and reducing swelling of electrode plate during use, and so as to improve cycling stability of the battery prepared by the anode material.

Compared with Example 1, in Comparative Examples 2 and 3, the content ratios of the doped iron element and nickel element, i.e., A/B, are both not within the scope of the present disclosure, resulting in both reduced cycle performances of the batteries prepared by these anode materials. In addition, too few doped iron element and nickel element have a weak influence on volume expansion of the primary particle, thereby not effectively relieving volume expansion of the anode material caused by silicon during de-lithiation and lithiation, while excessive doped iron element and nickel element, due to magnetism thereof, have an adverse influence on the anode material, and do not relieve volume expansion of the anode material, either.

Compared with Example 1, in Comparative Example 4, no iron element or nickel element was doped, resulting in significantly decreased pressure resistance hardness of the primary particle of the anode material. During cycle process of charging and discharge, volume expansion stress of the particle of the anode material during de-lithiation and lithiation easily leads to particle breakage, thereby reducing cycling stability of the battery prepared by the anode material.

Compared with Example 1, in Comparative Example 5, only ferric nitrate was added, resulting in an excessively large ratio A/B in the final anode material, that is, excessive iron element added. The magnetism of iron has a large influence on the anode material, which is not beneficial to cycling stability of the anode material.

Compared with Example 1, in Comparative Example 6, only nickel nitrate was added. A volume expansion effect of nickel element is obvious at heating, thereby increasing volume expansion of the active material. Compared to a synergistic effect of nickel element and iron element, an inhibitory effect of the single nickel element on expansion is poor, which is not beneficial to cycling stability of the anode material.

The applicant states that the detailed process equipment and process flow of the present disclosure are illustrated through the above examples in the present disclosure, but the present disclosure is not limited to the above detailed process equipment and process flow, that is, it does not mean that the present disclosure must be implemented relying upon the detailed process equipment and process flow above. It will be apparent to those skilled in the art that any improvements made to the present disclosure, equivalent replacements to the raw materials of the products of the present disclosure and addition of adjuvant ingredients, and choices of the specific implementations, etc., all fall within the protection scope and the disclosure scope of the present disclosure.

## Claims

1. An anode material, **characterized in that** the anode material comprises a secondary particle, wherein the secondary particle comprises a plurality of agglomerated primary particles, and wherein a primary particle of the plurality of primary particles comprises an active material doped with iron element and nickel element, wherein the iron element accounts for a mass content of A ppm in the anode material, the nickel element accounts for a mass content of B ppm in the anode material, and 9.2≤A/B≤20.

2. The anode material according to claim 1, **characterized in that** a total mass content of the iron element and the nickel element accounts for <1% in the anode material.

3. The anode material according to claim 2, **characterized in that** the anode material satisfies at least one of the following features:
(1) the iron element accounts for a mass content of A ppm in the anode material, wherein 0.1≤A≤1000; and
(2) the nickel element accounts for a mass content of B ppm in the anode material, wherein 0.1≤B≤500.

4. The anode material according to claim 1, **characterized in that** the anode material has a pressure resistance hardness of ≥100 Mpa.

5. The anode material according to claim 1, **characterized in that** the anode material satisfies at least one of the following features:
(1) the active material comprises a silicon-based material; and
(2) the active material comprises a silicon-based material, and the silicon-based material comprises at least one of crystalline silicon, amorphous silicon, silicon oxide, silicon alloy, and a composite of crystalline silicon and amorphous silicon.

6. The anode material according to claim 1, **characterized in that** the anode material satisfies at least one of the following features:
(1) the plurality of primary particles have an average particle size D₅₀ of 1 nm to 500 nm; and
(2) a primary particle of the plurality of primary particles has a particle size satisfying the following relationship: (D₁₀₀-D₁₀)/D₅₀≥1.5.

7. The anode material according to any one of claims 1 to 6, **characterized in that** the active material comprises a silicon-based material, the silicon-based material is further doped with an oxygen element, and the oxygen element accounts for a mass content of 0.1% to 18% in the anode material.

8. The anode material according to any one of claims 1 to 6, **characterized in that** the anode material further comprises a carbon material present on at least a part of surface of the secondary particle and/or the primary particle, and the carbon material forms a carbon layer.

9. The anode material according to any one of claims 1 to 6, **characterized in that** the anode material has a specific surface area of 0.1 m²/g to 5 m²/g.

10. The anode material according to any one of claims 1 to 6, **characterized in that** the anode material has a median particle size of 0.5 µm to 30 µm.

11. A preparation method of an anode material, **characterized in that** the preparation method comprises:
performing heat treatment on a mixture containing a silicon source precursor, an iron dopant and a nickel dopant to obtain a primary particle doped with iron and nickel; and coating the primary particle to obtain the anode material, wherein the iron element accounts for a mass content of A ppm in the anode material, the nickel element accounts for a mass content of B ppm in the anode material, and 9.2≤A/B≤20.

12. The preparation method according to claim 11, **characterized in that** the iron dopant comprises at least one of iron powder, ferric nitrate, nickel nitrate, ferrous lactate, ferric citrate, yellow blood salt, ferric glycinate, and ferrocene; and/or
the nickel dopant comprises at least one of nickel oleate, nickel propionate, nickel butyrate, nickel octoate, nickel lactate, nickel benzoate, nickel bis(acetylacetonate), nickel salicylate, and nickel alkylphenyl salicylate.

13. The preparation method according to claim 11, **characterized in that** a process for performing heat treatment on a mixture containing a silicon source precursor, an iron dopant and a nickel dopant comprises: forming primary particle from a silicon source precursor through vapor deposition, and doping metal vapor generated by iron dopant and nickel dopant into the primary particle, wherein a mass ratio of the iron dopant and the nickel dopant is 0.1 to 30.

14. The preparation method according to claim 11, **characterized in that** a process for performing heat treatment on a mixture containing silicon source precursor, an iron dopant and a nickel dopant comprises: adding a metal reducing agent into a mixed solution containing a liquid silicon source precursor, an iron dopant and a nickel dopant, solid-liquid separating to obtain a mixture, and performing heat treatment to obtain a primary particle doped with nickel and iron, wherein a mass ratio of the liquid silicon source precursor, the iron dopant, the nickel dopant, and the metal reducing agent is (40 to 100): (0.01 to 1): (0.05 to 1): (0.01 to 5).

15. A battery, **characterized in that** the battery comprises the anode material according to any one of claims 1 to 11, or the anode material prepared by the preparation method according to any one of claims 12 to 14.
